# EUROPEAN PATENT SPECIFICATION

(11) **EP 0 660 811 B1**
(45) Date of publication and mention of the grant of the patent: **27.12.1996**
(21) Application number: 93922616.3
(22) Date of filing: 14.09.1993
(51) Int. Cl.: C04B 41/86

(54) **LAMINAR PRODUCT FOR GLAZING THE SURFACES OF TILES AND OTHER PURPOSES, AND APPLICATION OF SAID PRODUCT**
LAMINARES PRODUKT ZUM GLASIEREN VON FLIESEN UND ANWENDUNG DIESES PRODUKTES
PRODUIT LAMELLAIRE DESTINE A EMAILLER LA SURFACE DE CARREAUX, ET APPLICATION DUDIT PRODUIT

(30) Priority: 17.09.1992 IT FI920182
(43) Date of publication of application: 05.07.1995
(73) Proprietor: COLOROBBIA S.P.A., I-50056 Monteluppo Fiorentino (IT)
(72) Inventor: BRUSA, Augusto, I-40026 Imola (IT)
(74) Representative: Mannucci, Gianfranco, Dott.-Ing.
(86) International application number: IT9300097
(87) International publication number: WO9406728

(56) References cited:
- EP-A- 0 306 727
- DATABASE WPI Week 7715, Derwent Publications Ltd., London, GB; AN 77-25993Y & JP,A,52 027 406 (TOMOEGAWA PAPER MFG KK)
- G. SMOOK 'Handbook for pulp & paper Technologists' 1989 , CANADA see page 170, left column, line 56 - line 59 see page 203, left column, line 16 - line 20 see page 204, left column, line 34 - line 37 see page 209; figures 16-1 see page 220, left column, line 31 - line 34 see page 226; figures 16-50 see page 262, line 1 - line 5 see page 276; figures 19-4
- CHEMICAL ABSTRACTS, vol. 86, no. 4, 24 January 1977, Columbus, Ohio, US; abstract no. 20953s, page 284 ;
- CHEMICAL ABSTRACTS, vol. 86, no. 4, 24 January 1977, Columbus, Ohio, US; abstract no. 20953s, page 284 ; & JP-A-51090313

## Description

The invention relates to the formation of a laminar product - hereafter referred to as "glaze paper" for brevity - intended to facilitate the preparation of the tile with the layer to be fused in the firing or in the second firing for the production of glazed tiles.

Many advantages are obtained with this system by comparison with the hitherto known systems, which require the distribution of the material in dried or mixed powder or crushed form (such as a suspension in water), as will be evident particularly to experts in the field. In particular, various kinds of advantage are obtained, including a reduced loss of glaze material; better environmental protection, with evident ecological advantages; healthier working environments; less difficultly in glazing scrap and waste products; greater reliability and more flexible management of the production cycle; and the possibility of combination with a support which need not be fired and which can have a thickness much less than that currently in use, owing to the elimination of water which would otherwise adversely affect the mechanical strength of the unfinished support.

A previous patent (Italian patent No. 1,104,458 of 21.10.85, filed on 6 September 1978 under application No. 1277A/78) specifies a product having similar functions.

A method for the production of "glaze paper" is disclosed in JP-A-52 027 406. According to this known method, the laminar product is obtained with a mixture of 90% of glaze and 10% of fibrous material, comprising at least 60% of synthetic fibres and the remaining portion of cellulose pulp.

A first subject of the invention is an improved method for the formation of the said laminar product - capable of being combined with a support for floor or wall tiles or with the material for the formation of such a support, to glaze the surface thereof which is intended to be visible when in use - according to which method,
- a mixture, in water, of a batch of inert substan ces including a glaze and 5 - 50 % based on the total weight of the inert substances of clay and of cellulose fibres is prepared, the mixture including 90-98% of glaze and clay and 10-2% of fibres;
- the said mixture is fed to dewatering equipment, such as a flat suction table or a drum machine of the type used for paper and cardboard making, a dewatering press with filter belts, or other machine;
- a measured amount of a flocculating polyelectrolyte is added to the mixture being fed; and
- with subsequent treatments, a layer is formed with dewatering, drying and any necessary surface treatment for retention and fixing to prevent the detachment of surface particles.

The inert substances and cellulose fibres will advantageously be in proportions of approximately 95% and 5%.

The mixture may be a dispersion of inert substances and cellulose fibres with a concentration of the order of 20% of the total weight, the remainder being substantially water. The percentage of water varies according to the requirements of the type of dewatering equipment used.

The dry substance number of the product may be as much as 1000 g/m², with a relatively slow formation rate of the order of 2 to 15 m/min. and above, in the case of dewatering equipment of the paper-making machine type.

The inert substances are based on glazes, advantageously with the presence of clay, which may be present in an amount of the order of 10% by weight of the total inert substances.

An equipment is also described for the formation of the said laminar product (called glaze paper) by the method described above. The said equipment substantially comprises: means for forming a mixture of inert substances capable of forming vitreous glaze and of cellulose fibres in water; and means of feeding the said mixture to a machine for the formation of the said layer, in other words the laminar product, from this mixture, and for its dewatering and finishing.

According to a possible embodiment, the equipment may comprise a dewatering press with two opposing continuous filter belts, followed by calendering means if required.

According to another possible embodiment, the equipment may be of the paper-making type - such as that using a flat table, that using a drum machine, or other machines - with suitable adaptation in relation to the characteristics of the suspension formed with the mixture.

In the version with a flat table, the equipment may comprise: tanks with agitators for the mixing and homogenization of a mixture of inert substances capable of forming vitreous glaze and of cellulose fibres in an aqueous dispersion; pumping means for the forced feed of the said mixture to the so-called flat suction table of the said equipment; a unit with a metering pump to introduce a flocculating electrolyte into the circuit or into each circuit for feeding the mixture to the flat table; and means of distributing the said mixture, in aqueous dispersion, with the addition of the polyelectrolyte, over the belt of the said flat table.

In practice, the metering pump for the polyelectrolyte introduces it into the delivery circuit or into each delivery circuit of the pumping and dispersal means before or during the distribution over the flat table.

The means of distribution may comprise, at the end of the delivery circuit or of each delivery circuit, a gravity sliding wall which is shaped to distribute the suspension in fan form until it reaches the initial part of the flat table. The said sliding wall may be inclined downwards and in the direction of advance of the screen of the flat table, and with a horizontal section which is convex in the direction of advance of the said screen.

The pumping means for the mixture advantageously comprise a closed circuit with forced circulation from a supply chest or vat for the homogenization of the mixture and - for the feed to the table - circuits branching off from the said closed circuit, each having a metering pump for the mixture, and each being combined with an electrolyte metering and dispersing system.

The equipment also comprises: a breaker or pulper which can be filled with the cellulose and operates in a closed cycle with means for purifying thick pulp and beating means, such as a conical beater; a vat which receives the cellulose pulp; a mixer and agitator of the gate or similar type - for the final mixture, to which the inert substances are added; means for the recovery of first and second waters, for the settling of at least the second waters and for their re-use in the pulper and/or in the mixer of the final mixture.

Also included in the equipment are means of recycling waste products, such as dry trimmings, machine-shop rejects and other materials, into the pulper and into the-beater, leading to a vat for re-use.

The equipment also comprises, downstream from the flat table, a wet press or flat press, a dry end and a glazing machine if necessary, the dry end comprising at least one hot-air drier with a support for a flat advance, and particularly a number of hot-air driers, with, between these, means of distribution of atomized size, such as PVA; a transverse cutting and turn-over unit may also be provided upstream from one of the driers, to expose the previously downward-facing surface to the subsequent size distributor.

Other embodiments of the method for the production of glaze paper are also indicated in the text of the present description and in the claims.

A further subject of the invention is a glaze paper product made as specified above.

The invention also comprises the use of a glaze paper product made as defined and applied above, to create a layer of glaze on a previously fired ceramic support or, preferably, on a ceramic support to be finished by firing - particularly by the so-called single firing process - during which the cellulose fibres are destroyed. For this application, when the use of a press and mould is required for ceramic or stoneware or other tiles, a laminar product as specified is placed above the material held in the mould, after the mould has been filled with powdered clay, for subsequent pressing. When pressing is carried out with two successive pressings, the laminar product may be inserted between the first and the second pressing. To achieve connection by means of a press, use may advantageously be made of a system for retaining the laminar product, comprising a porous wall in the pad by means of which retention is provided by suction.

The invention will be more clearly understood from the description and the attached drawing, which shows a non-restrictive practical example of the invention. In the drawing,
Figs. 1A and 1B are a diagram of equipment with a flat table, in a number of portions;
Fig. 2 is a perspective view of a detail of the system of distribution of the pulp and of the polyelectrolytes to the flat table;
Figs. 3 and 4 are a vertical local section through III-III in Fig. 2 and a view from line IV-IV in Fig. 3; and
Figs. 5 and 6 are two diagrams of equipment using a dewatering machine with filter belts and a machine known as a drum machine.

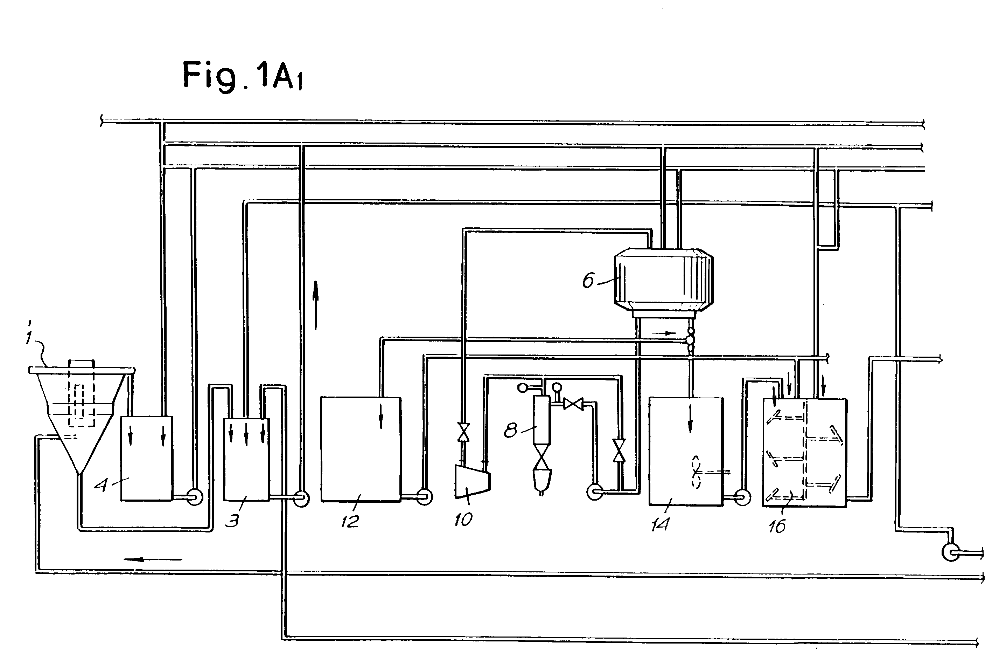

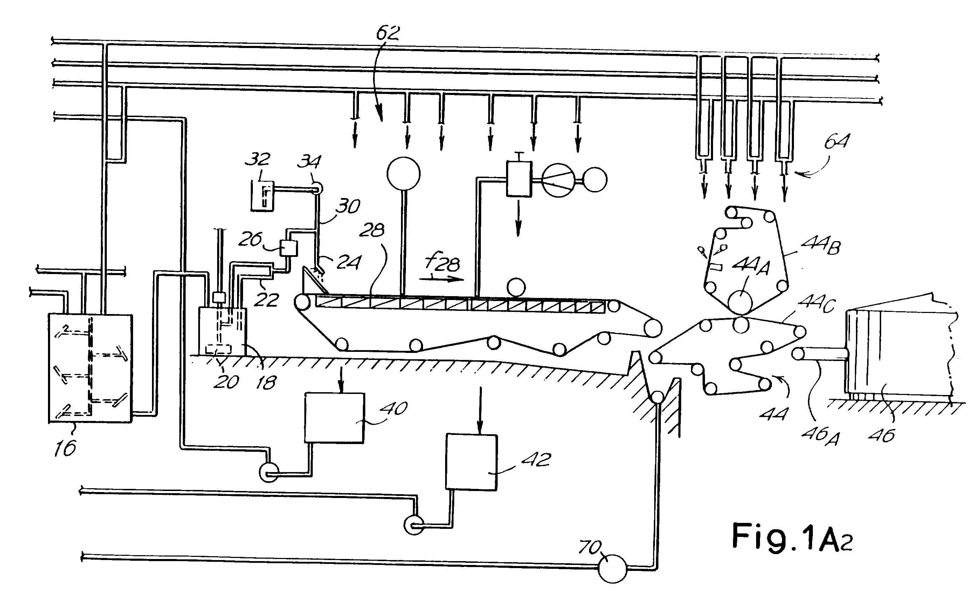

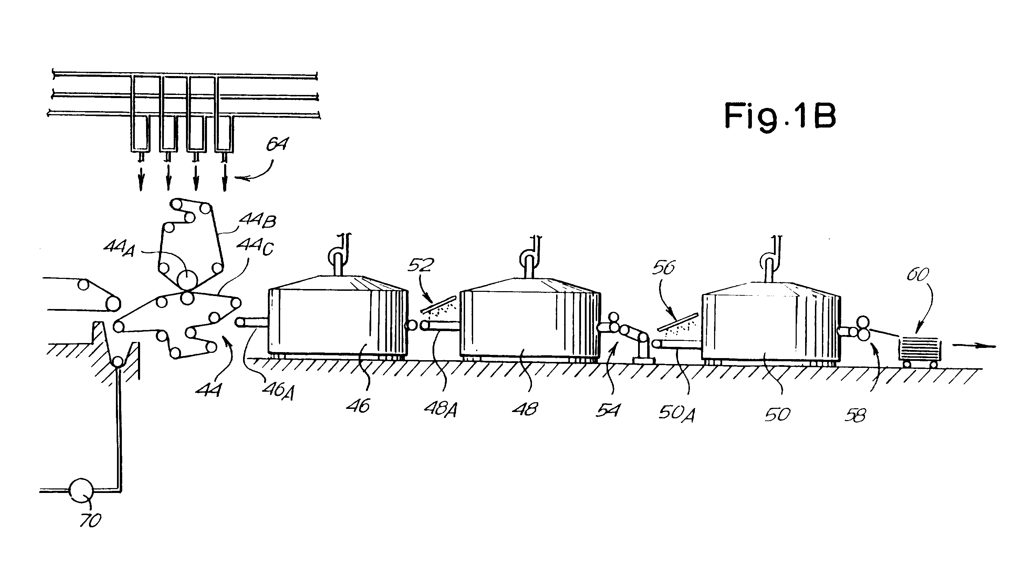

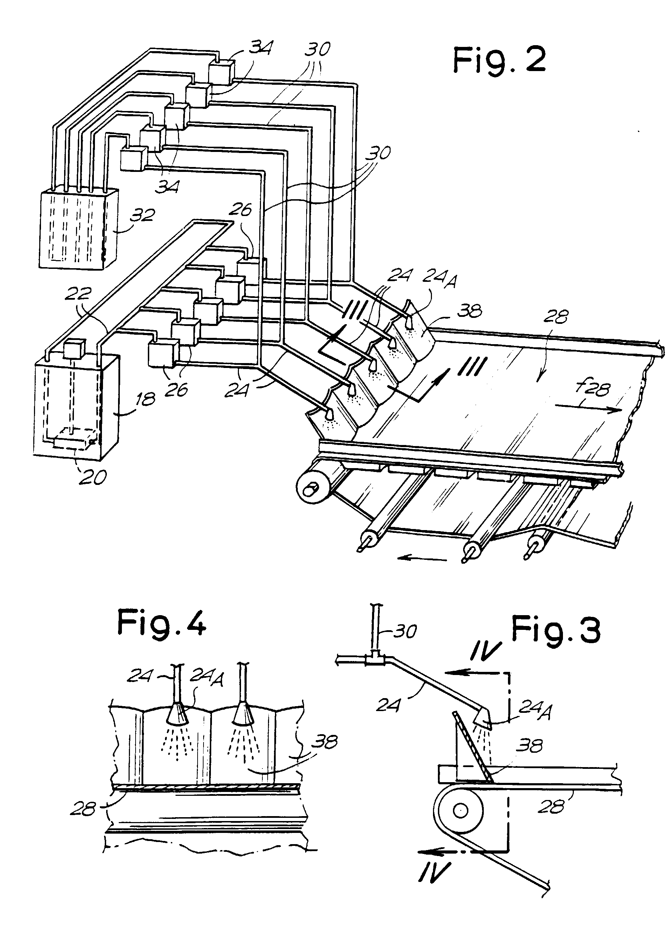

According to the schematic illustrations in the attached drawing (Figs. 1 to 4), 1 indicates a settling unit with conical hopper for the second waters, and 3 and 4 indicate two vats for receiving and agitating the first and second waters respectively. 6 indicates a breaker or pulper, which receives first water and/or second water together with the cellulose to be broken down and homogenized; a thick pulp purifier 8 and a beater 10, which may be a beater of the conical type, are provided in a circuit combined with the said pulper 6. From this pulper 6, the material - as an alternative to the closed circuit described previously - may be sent, after beating, to a tank 12 with an agitator for the mixture of water and cellulose, or to a second tank 14 with an agitator, from which the material may be collected and sent to a finished pulp mixing container 16 with an agitator, for example of the gate type, the helical type, or other type; this container 16 may also be fed from the tank 12 and/or from the first and/or second waters, and may also receive the inert substance (glaze). 18 indicates a supply tank or vat of relatively small capacity, which is supplied with the mixture of inert substance and cellulose prepared in the container 16; in the tank 18 the material is kept at a constant level and agitated through a closed circuit which comprises a vertical pump 20 and a closed-circuit duct 22, where the pulp circulates at a relatively high speed to maintain the uniformity of the pulp mixture in the container 18. A number of feed circuits 24 in parallel with each other, with corresponding metering pumps 26 for the metered feed of the pulp to the flat table, indicated as a whole by 28, branch off from the closed circuit 22. Circuits 30 for the feed of the polyelectrolyte, which is taken from a tank 32 by metering pumps 34, open into the ducts 24 of the feed circuits, mainly downstream from the metering pumps 26. The ducts 24 of the feed circuits open, with suitable terminals 24A, on an equal number of gravity sliding walls 38, which are curved - in horizontal section - with their convex sides facing the flat table 28 and inclined downwards and towards the flat table, in other words in the direction of advance of the screen of the table 28 as shown by the arrow f28. The distributors 24A feed the pulp to the individual walls 38 so that the material is discharged from these in a substantially uniform way on to the front of the screen advancing as shown by the arrow f28 along the table 28, where the first and second waters are removed, simply by gravity in the case of the first water and by suction in the case of the second water; the said waters are collected in containers 40 and 42 respectively, and are then circulated according to the system shown in Fig. 1.

Downstream from the screen of the flat table 28 there is a wet press or flat press 44 of the conventional type with a suction cylinder 44A round which a screen 44B runs, while the material from the flat table 28 is conveyed by a conveyor 44C.

The dry end, comprising, according to the illustrated system, three hot-air driers 46, 48, 50, disposed in series with flat conveyors 46A, 48A, 50A, is disposed downstream from the said wet press or flat press 44. 52 indicates an atomizer for polyvinyl alcohol (PVA) or other size, capable of distributing on the upper surface of the continuous material which has passed through the first drier 46 and is on the conveyor 48A of the second drier 48. A unit 54 for transverse cutting and for turning over the sections of product separated by the transverse cutting may be provided at the exit from the said drier 48, to place the individual overturned sections on the conveyor 50A of the third hot-air drier 50; a second atomizer 56 similar to that 52 distributes the size on the surface of the product which faced downwards in the passage through the driers 46 and 48. A machine 58 known as a glazing machine may be located at the exit from the drier 50, for the surface treatment of the sheets of material obtained from the drying and subsequently accumulated on a conveying means 60 or equivalent. The material constitutes the "glaze paper".

As an alternative to the above, it is possible to have the size distributed directly on to both surfaces of the continuous product, and also to have the product accumulated on a reel.

The equipment may be completed by washing units such as those indicated schematically by 62 and 64, for washing the various mechanisms with untreated water or with first or second water, according to the requirements and possibilities.

The whole of the equipment will be constructed with special materials, and particularly with a predominant use of stainless steel, to avoid the presence of any impurities in the glazes which may lead to colour changes in the glazes during firing.

In the system shown, the waste water cycle is a practically closed cycle which does not require the consumption of appreciable quantities of water, since the water is totally purified within the cycle and recycled. If the equipment is close to other equipment capable of using water with a 50-100 ppm content of suspended inorganic substances, in other words glaze, clean water could be used instead of recycled water at certain particularly sensitive points (felt washing, stuffing-box seals), with a significant advantage in the operation of the equipment, with better drying before the dry end (through better operation of the pumps and seals), less wear of the pump shafts, and other advantages.

To prevent damage to and contamination of the material being processed, all the machinery in contact with the product must be made totally from stainless steel or at least from materials not harmful to the quality of the finished product, for example rubber, plastic or other material. As has been stated, this avoids the presence of impurities in the glaze which might cause deterioration, particularly of colour, during firing, which intensifies colour defects in particular.

The operating cycle requires the preliminary breaking of the paper pulp, which is carried out in the breaker or pulper 6. The pulper can treat a batch of cellulose sufficient for a number of shifts, possibly with intermittent operation. The pulp broken down by the pulper 6 is sent by a pump to the thick pulp purifier 8, then to the conical beater 10, and then again in the closed cycle to the pulper 6, until the desired refinement characteristics are obtained. After sufficient time, depending on the desired characteristics, for the treatment of the paper material, the cellulose pulp is sent to the vat and agitator 14, from which it is taken according to the manufacturing requirements. Any dry trimmings, operating waste products and other materials may be reworked in the pulper 6 in the closed circuit comprising the beater 10 and, when completely broken down, sent to the vat 12 to await re-use.

As an alternative to the above, a Hollander may be used in this position for recycling.

The refined cellulose pulp and the rebroken trimmings are periodically added in metered batches to the vat or to one of the vats 16 with the gate or other agitator, to which are added - manually from bags or with suitable automatic metering equipment - the glaze to be pulped as an inert substance with the refined cellulose pulp from the pulper 6. The glaze may alternatively be added as an aqueous suspension.

From the mixing vat 16 the pulp is sent to the vat 18 for feeding the continuous paper machine. The vat 18 is kept at a constant level with an automatic filling system. The material in the vat 18 is agitated by recycling with a vertical pump or pumps 29 which continuously deliver the pulp - with a total concentration of 20% and 80% water - to the duct 22 and from there to the set of metering pumps 26 (of the membrane or other types) which meter it and distribute it through the ducts 24 and the distributors 24A to the forming screen of the flat table 28 by sliding along the sliding walls 38. In its passage between the metering pump 26 and the screen, the pulp has the correct amount of polyelectrolyte, measured by the other set of metering pumps 34 of suitable capacity, added to it, and is homogenized by a suitable system.

The flat table 28 is provided with all the appropriate accessories and has low- and high-intensity vacuum sections for the removal of the first and second waters, to provide sufficient drainage for the formation of a sheet having a substance number of the order of 800 g/m² (or + 200) at a rate of the order of 10 m/minute. The first water is removed with minimum pressure drop, in practice by gravity, to form a filtering layer, with the aid of the polyelectrolytes.

The waters extracted from the low-vacuum equipment, known as the "first water" in paper-making jargon, with a glaze concentration of approximately 0.5-2% are recycled to the vat 3 to be re-used for dilution in the vat 16 and in the pulper 6. The waters extracted by the high-vacuum pumps and those from the screen and felt washing sprays, known as the "second water" in paper-making jargon, is recycled to the settling unit 1, from where they are passed to the vat 4 to be re-used for the washing sprays, for the seals of the vacuum pumps, and for dilution, in case of unavailability of "first water" or untreated water. The fresh water requirement of the equipment, as described here, is therefore very low, and corresponds - in theory - to the evaporated water only, or even less than this, if vapour recovery is provided. If extracted water can be used elsewhere, a greater use of fresh water for the washing operations may be specified.

The sludge deposited in the settling unit 1 and the water containing the screen trimmings and any "wet" scraps are sent by a pump 70 to the first water in the vat 3.

On leaving the screen of the flat table 28 with a dryness of approximately 50-60%, the semi-finished product for the "glaze paper" passes to the flat press 44, where it is brought to a dryness of approximately 70-75%, and from there to the hot-air dry end 46, 48, 50; where an input of air at approximately 150-170°C and an output of air at approximately 50-70°C is provided.

A flat dry end, as described - in contrast to drying carried out with a steam-heated cylinder system - is preferable, since this special form of dry end enables even a very fragile and delicate material, such as the semi-finished product for the "glaze paper", to be treated more gently and with fewer problems than in the cylinder drier.

The time required for drying from 70% to 95% with hot air is in practice less than 2 minutes. On leaving the first drier 46, the paper is treated with PVA sprayed on by the device 52, and enters the second drier 48. On leaving the latter, the paper can be cut transversely and turned over to receive the PVA on the underside. This may be done with the devices 54 and 56. The cutting and turning system may be constructed to turn over either in the same line - as in the drawing - or with rotation of the direction of advance through 180° or 90° towards the third drier 50, depending on the available space. After the second application of PVA on the face opposite that treated with the device 52, final drying is carried out in the unit 50. It is also possible to operate continuously without cutting and without turning, sizing the two surfaces. In this case it is possible to cut and stack, or wind on reels, subsequently.

On finally leaving the dry end, the glaze paper may be squeezed between two steel cylinders 58 similar to those of what is known as the glazing machine, and then pass to the final stage of cutting and packaging or immediate use.

It appears suitable to adopt a working format of approximately 120 cm for the machine, and also to specify: a fibre concentration in the dry finished product of the order of 5%, or possibly less, of the total weight; a pulp concentration on the forming table 28 of the order of approximately 15-20% of the total; a glaze paper sheet substance number of approximately 800 g/m²; and a speed of the manufacturing screen and consequently of the equipment variable, for example, from 2 to 15 m/min. or above.

In a possible variant embodiment, the equipment may comprise a dewatering machine not of the type used for paper, but of the pressing type with two opposing filter belts between which the mixture to be dewatered is fed and advanced.

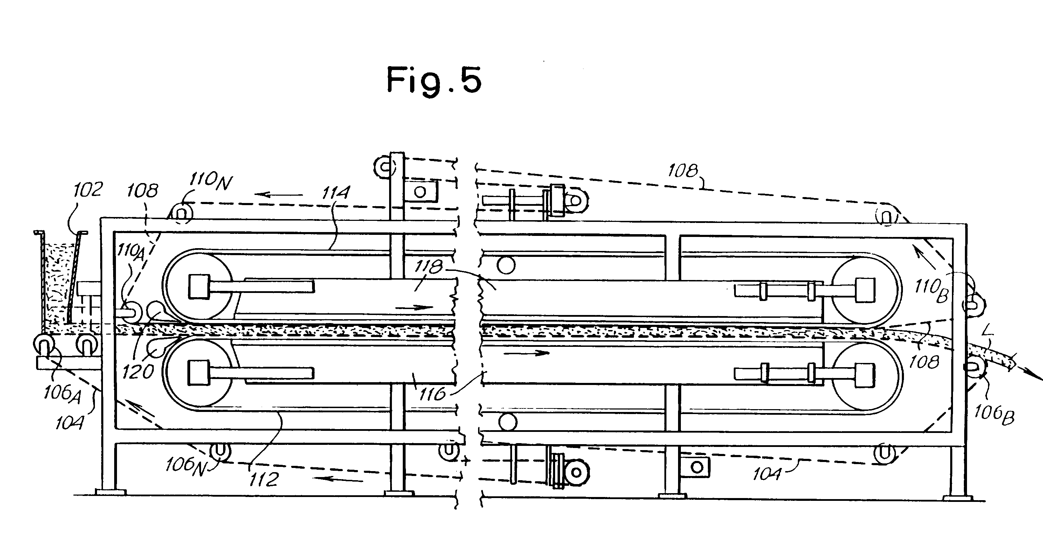

Fig. 5 is a diagram of a dewatering machine which comprises a feeder 102 which discharges the product to be dewatered on to the upper length of a conveyor belt 104, running over a plurality of rollers 106A, 106B,... 106N. The lower active length of a further filtering conveyor belt 108, running around a plurality of rollers 110A, 110B,... 110N, extends above the upper active length cf the filtering conveyor belt 104. The two adjacent horizontal active lengths of the two conveyor belts 104 and 108 are externally flanked by the upper active length of a lower belt 112 and the active lower length of an upper belt 114; these belts 112, 114 form longitudinal drainage channels. Two pressing cases 116 and 118, which may be of the hydraulic type, associated with suitable stiffening frames, flank the outside of the active lengths of the belts. 120 indicates suction devices for the liquid extracted - by pressing and suction - from the pulp fed at 102, to obtain the laminar product L at the exit, on the right in the drawing. To achieve dewatering, the conveyor belts 104 and 108 are of the filtering type and the belts 112 and 114 are pressure belts which act on the active lengths of the belts 104 and 108; the belts 112 and 114 have longitudinal channels for the outflow and discharge of the liquid phase, which is collected by the extraction devices 120. The filtering conveyor belts 104 and 108 ensure the maximum conservation, in the laminar material L, of the content of the pulp fed.

With the disposition in Fig. 5, it is also possible to obtain a product equivalent to that obtained with the disposition of the flat table type described previously.

In another possible variant embodiment, the equipment may comprise a device of the type used in the production - again continuous - of paper, known as "drum machines". In a machine of this type, the sheet is formed on the cylindrical surface of one or more drums rotating with a horizontal axis, covered by a phosphor bronze screen and with approximately two thirds immersed in vats containing the highly diluted pulp; the water filtering inside them deposits on the screen a uniform layer of fibres which is collected by an endless felt which, through systems not dissimilar to those in the continuous machine having the disposition illustrated and described previously, takes the sheet to the presses, to the drying cylinders and to the subsequent treatments.

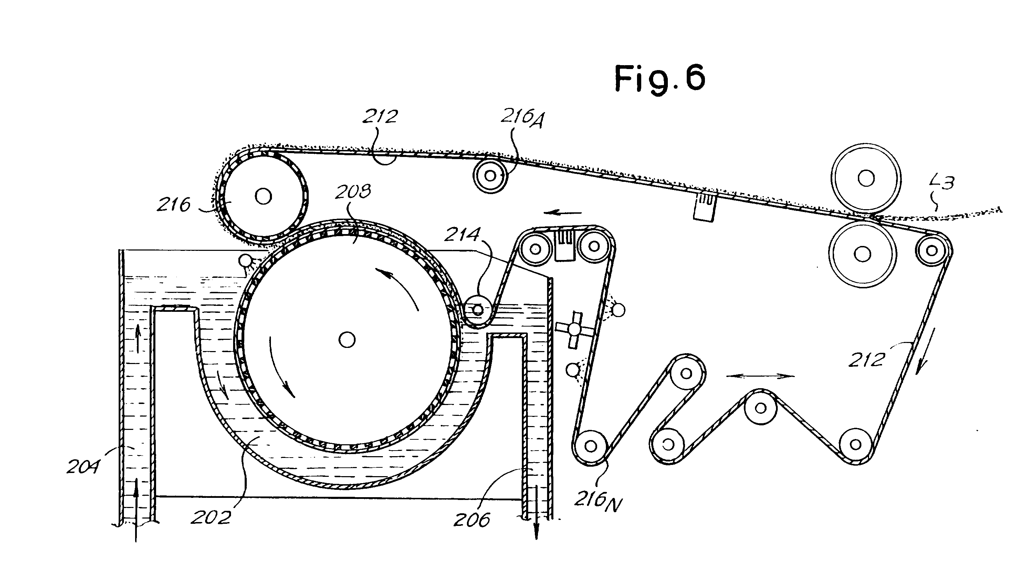

More particularly, Fig. 6 is a diagram of such a drum machine. 202 indicates a vat which is fed from a passage 204 for continuous circulation to the vat 202 and to an outlet 206 located opposite the feed 204. The suspension, kept suitably homogeneous with suitable means to avoid stratification and settling, is fed into the vat 202. A drum 208 rotating with a horizontal axis and covered with a suction screen made of phosphor bronze or other material is partially immersed in the vat 202 which has a partially cylindrical form; a certain degree of vacuum is created inside the drum 208 to provide suction from the vat through the filtering wall of the said screen. The screen retains the solid phases in suspension, separating them from the water which is collected inside the drum and removed. The suspended particles accumulate on the screen and, by the rotation of the drum in the direction of the arrows, there emerges from the level of the vat 202, on the side of the outlet 206, a thickness of the material - already present in the suspension - which has been deposited on the screen. The emerging section of the drum 208 is adjacent to a continuous felt 212 which in particular runs around rollers 214 and 216, defining the arc of the continuous felt which is located on the drum 208. The felt subsequently runs around rollers 216A-216N, which also have functions appropriate for the treatment of the felt. The more or less wet material in the solid phase lying between the drum 208 and the felt 212 is sucked against the felt by the return roller 216 which is of the suction type; consequently, the layer of material is practically detached from the surface of the drum 208 before this is re-immersed in the pulp in the vat 202, and is transferred to the felt 212. The material collected by the felt 212 is removed in a suitable way from this felt as indicated by L3.

In this case also, it is possible to produce a material similar to that produced with the flat table disposition described in the first example illustrated.

It is to be understood that the drawing shows only one example provided solely as a practical demonstration of the invention, and that this invention may vary in its shape and disposition without thereby departing from the scope of the guiding concept of the invention. For example, it is possible to provide different size distribution systems, for example with spraying from below, with transfer by contact rollers, or with lateral turning.

## Claims

1. Method for the formation of a laminar product capable of being combined with a support for floor or wall tiles or with the material for the formation of such a support, to glaze the surface thereof which is intended to be visible when in use, wherein a sheet including a major amount of glaze and an amount of fibre material is formed, characterized in that a mixture, in water, of a batch of inert substances capable of forming a glaze and of cellulose fibres, in proportions of 90%-98% and 10%-2% respectively, is prepared; that said inert substances include a glaze and clay in an amount in the range of 5-50% of the total weight of the inert substances; in that the said mixture is fed to dewatering equipment, such as a flat suction table or a drum machine of the type used in paper making, a dewatering press with filter belts, or other machine; in that a measured amount of a flocculating polyelectrolyte is added to the mixture being fed; and in that, with subsequent treatments, a layer is formed with dewatering, drying and any necessary surface treatment for fixing.

2. Method according to Claim 1, characterized in that the inert substances and the cellulose fibres are in proportions of approximately 95% and 5%.

3. Method according to Claim 1, characterized in that in one case the mixture of inert substances and cellulose fibres is a dispersion and has a concentration of the order of 20% of the total weight, the remainder being substantially water.

4. Method according to Claims 1 to 3, characterized in that the surface treatment for fixing comprises a distribution of PVA (polyvinyl alcohol) or other size.

5. Method according to preceding claims, characterized in that the dry substance number of the product is of the order of 800 g/m², with a relatively slow formation rate.

6. A laminar product for glazing the surface of a tile, including a major amount of inert substances and a fraction of fibrous material, characterized in that it includes from 90 to 98% of said inert substances comprising a mixture of glaze and clay, and from 10 to 2% of cellulose fibres, and that the amount of clay is between 5 and 50% of the total weight of the inert substances.

7. Use of a laminar glaze paper product according to claim 6, to create a layer of glaze on a previously fired ceramic support or, preferably, on a support to be finished by firing (single firing process), during which the cellulose fibres are destroyed.

8. Use according to Claim 7 , characterized in that in a press and mould for ceramic or stoneware or other tiles, a laminar product according to claim 6 , is inserted above the material held in the mould, after the mould has been filled with powdered clay, for subsequent pressing.

9. Use according to Claim 7 or 8 , characterized in that, in presses using two successive pressings or pressing stages, the laminar product is inserted between the first and the second pressing.

10. Use according to Claim 7 or 8 or 9 , characterized in that the laminar product is retained by a porous wall in the pad of the press.

11. Use according to Claim 7 , characterized in that it comprises the connection of the layer and of the preformed and compacted support with the aid of glueing means or another fixing system.

## Patentansprüche

1. Verfahren zur Bildung eines laminaren Produktes, das mit einem Träger für Boden oder Wandfliesen oder mit dem Ausgangsmaterial für einen solchen Träger kombinierbar ist, um dessen im Gebrauch sichtbare Oberfläche zu glasieren, wobei ein Blatt gebildet wird, das eine überwiegende Menge Glasur und eine Menge von Fasermaterial enthält,
dadurch **gekennzeichnet**, daß in Wasser eine Mischung aus einer Charge von inerten Substanzen, die eine Glasur bilden können, und Zellulosefasern in relativen Anteilen von 90% bis 98% bzw. 10% bis 2% hergestellt wird; daß die inerten Substanzen eine Glasur und Ton in einer Menge im Bereich von 5 bis 50% des Gesamtgewichtes der inerten Substanzen enthalten; daß die Mischung einer Entwässerungseinrichtung zugeführt wird wie z.B. einem flachen Saugtisch oder einer Trommel von dem bei der Papierherstellung verwendeten Typ, einer Entwässerungspresse mit Filterbändern, oder einer anderen Maschine; daß eine gemessene Menge eines Flockungsmittel-Polyelektrolyten der zugeführten Mischung hinzugefügt wird, und daß durch anschließende Behandlungen eine Schicht geformt wird unter Entwässerung, Trocknung und ggf. erforderlicher Oberflächenbehandlung zur Fixierung.

2. Verfahren nach Anspruch 1,
dadurch **gekennzeichnet**, daß die inerten Substanzen und die Zellulosefasern im Verhältnis von etwa 95% und 5% vorliegen.

3. Verfahren nach Anspruch 1,
dadurch **gekennzeichnet**, daß in einem Fall die Mischung von inerten Substanzen und Zellulosefasern eine Dispersion ist und eine Konzentration in der Größenordnung von 20% des Gesamtgewichts aufweist, wobei der Rest im wesentlichen Wasser ist.

4. Verfahren nach den Ansprüchen 1 bis 3,
dadurch **gekennzeichnet**, daß die Oberflächenbehandlung zur Fixierung eine Verteilung von PVA (Polyvinylalkohol) oder eines anderen Abbindemittels umfaßt.

5. Verfahren nach den vorangehenden Ansprüchen,
dadurch **gekennzeichnet**, daß die Trockensubstanzzahl des Produktes in der Größenordnung von 800 g/m² liegt, bei einer relativ niedrigen Bildungsgeschwindigkeit.

6. Laminares Produkt zum Glasieren der Oberfläche einer Fliese, enthalten einen überwiegenden Anteil von inerten Substanzen und einen Bruchteil von Fasermaterial,
dadurch **gekennzeichnet**, daß es 90 bis 98% der inerten Substanzen in Form einer Mischung aus Glasur und Ton und 10 bis 2 % von Zellulosefasern enthält, und daß die Menge von Ton zwischen 5 und 50% des Gesamtgewichtes der inerten Substanzen beträgt.

7. Verwendung eines laminaren Glasurpapierproduktes nach Anspruch 6 zur Bildung einer Glasurschicht auf einem zuvor gebrannten keramischen Träger, oder vorzugsweise einem durch Brennen (Einfachbrennverfahren) fertigzustellenden Träger, währenddessen die Zellulosefasern zerstört werden.

8. Verwendung nach Anspruch 7,
dadurch **gekennzeichnet**, daß ein laminares Produkt nach Anspruch 6 in eine Presse und Form für keramische oder Steinzeug- oder andere Fliesen eingesetzt wird oberhalb des in der Form enthaltenen Materials, nachdem die Form mit polarisiertem Ton für anschließendes Pressen gefüllt worden ist.

9. Verwendung nach Anspruch 7 oder 8,
dadurch **gekennzeichnet**, daß in Pressen, die mit zwei aufeinanderfolgenden Pressvorgängen oder Pressphasen arbeiten, das Laminarprodukt zwischen der ersten und der zweiten Pressung eingesetzt wird.

10. Verwendung nach Anspruch 7 oder 8 oder 9,
dadurch **gekennzeichnet**, daß das laminare Produkt durch eine poröse Wand im Stempel der Presse zurükkerhalten wird.

11. Verwendung nach Anspruch 7,
dadurch **gekennzeichnet**, daß sie die Verbindung der Schicht und des vorgeformten und verdichteten Trägers mithilfe eines Klebmittels oder eines anderen Fixiersystems umfaßt.

## Revendications

1. Procédé pour la formation d'un produit lamellaire susceptible d'être associé à un support pour dalles et carreaux muraux ou à un matériau pour la formation d'un tel support en vue de l'émaillage de sa surface qui est destinée à être visible à l'usage, dans lequel on produit une feuille comprenant une quantité majeure de glaçure et une quantité de matière fibreuse, caractérisé en ce que l'on prépare un mélange, dans de l'eau, d'une charge de substances inertes capable de former une glaçure et de fibres cellulosiques dans des proportions respectivement de 90%-98% et de 10 à 2% ; que lesdites substances inertes comprennent une glaçure et de l'argile dans la gamme de 5 à 50% du poids total des substances inertes ; que ledit mélange est acheminé vers un équipement de déshydratation tel qu'une table aspirante plane ou une machine à tambour du type employé dans la fabrication du papier, une presse à essorer avec des bandes filtrantes ou tout autre machine ; qu'une quantité dosée d'un polyélectrolyte floculant est ajoutée au mélange d'alimentation et qu'au cours de traitements ultérieurs, il se forme une couche par essorage, séchage et tout traitement de surface nécessaire pour le fixage.

2. Procédé selon la revendication 1, caractérisé en ce que les substances inertes et les fibres cellulosiques sont présentes dans des proportions d'environ 95% et 5%.

3. Procédé selon la revendication 2, caractérisé en ce que, dans un cas, le mélange de substances inertes et de fibres cellulosiques est une dispersion et possède une concentration de l'ordre de 20% du poids total, le reliquat étant pratiquement de l'eau.

4. Procédé selon les revendications 1 à 3, caractérisé en ce que le traitement de surface pour le fixage consiste en une distribution de PVA (polyalcool vinylique) ou d'un autre produit d'encollage.

5. Procédé selon les revendications précédentes, caractérisé en ce que le grammage en matière sèche du produit est de l'ordre de 800 g/m², avec une vitesse de formation relativement lente.

6. Un produit lamellaire pour l'émaillage de la surface d'un carreau comprenant une quantité majeure de substances inertes et une fraction de matière fibreuse, caractérisé en ce qu'il contient 90 à 98% desdites substances inertes constituées par un mélange de glaçure et d'argile et 10 à 2% de fibres cellulosiques, et que la quantité d'argile se situe entre 5 et 50% du poids total des substances inertes.

7. Utilisation d'un papier de glaçage lamellaire selon la revendication 6 destiné à produire une couche de glaçure sur un support céramique préalablement cuit ou, de préférence sur un support à parachever par cuisson (procédé monocuisson) au cours de laquelle les fibres cellulosiques sont détruites.

8. Utilisation selon la revendication 7, caractérisée en ce que, dans une presse et un moule pour céramique, grès-cérame ou autres carreaux, un produit lamellaire selon la revendication 6 est placé au-dessus de la matière maintenue dans le moule en vue d'un pressage subséquent après remplissage du moule par de l'argile pulvérulent.

9. Utilisation selon la revendication 7 ou 8, caractérisée en ce que, dans des presses utilisant deux pressages ou étapes de pressage successifs, le produit lamellaire est inséré entre le premier et le second pressage.

10. Utilisation selon la revendication 7, 8 ou 9, caractérisée en ce que le produit lamellaire est retenu par une paroi poreuse dans le tampon de la presse.

11. Utilisation selon la revendication 7, caractérisé en ce qu'elle consiste en une liaison de la couche et du support préformé et comprimé par collage ou à l'aide d'un autre système d'assemblage.
